# EUROPÄISCHE PATENTANMELDUNG

(11) **EP 2 149 646 A2**
(43) Veröffentlichungstag der Anmeldung: **03.02.2010**
(21) Anmeldenummer: 09009603.3
(22) Anmeldetag: 24.07.2009
(51) Int. Cl.: E04D 1/28, E04D 13/18, F24J 2/04

(54) **Dachziegel**

(30) Priorität: 29.07.2008 AT 11722008
(71) Anmelder: Deutsch, Wolfgang, 6074 Rinn (AT)
(72) Erfinder: Tilg, Hubert, 6465 Nassereith (AT); Ausserlechner, Georg, 6176 Völs (AT)
(74) Vertreter: Hofinger, Stephan

(57) **Zusammenfassung**

Dachziegel (1) mit einer, insbesondere metallischen, witterungsbeständigen Außenhaut (3), welche die Deckfläche des Dachziegels (1) zumindest teilweise abdeckt und im Dachverband (32) die Dachhaut mitbildet und einem, insbesondere aus Schaumkunststoff bestehenden, Isolierkörper (2) zur thermischen Isolation des Dachverbandes (32), wobei der Isolierkörper (2) auf seiner zur Deckfläche des Dachziegels (1) gerichteten Seite eine Wanne (4) bildet, wobei die Außenhaut (3) rahmenförmig ausgebildet ist und den zentralen Bereich der Deckfläche des Dachziegels (1) frei lässt.

## Beschreibung

Die Erfindung betrifft einen Dachziegel mit einer, insbesondere metallischen, witterungsbeständigen Außenhaut, welche die Deckfläche des Dachziegels zumindest teilweise abdeckt und im Dachverband die Dachhaut mitbildet und einem, insbesondere aus Schaumkunststoff bestehenden, Isolierkörper zur thermischen Isolation des Dachverbandes, wobei der Isolierkörper auf seiner zur Deckfläche des Dachziegels gerichteten Seite eine Wanne bildet.

Aus der GB 2 299 662 A und der DE 32 13 882 A1 sind bereits Dachziegel bekannt, die einerseits aus einem Isolierkörper und andererseits aus einem der Witterung ausgesetzten Metall bestehen. Bei beiden Schriften ist der Querschnitt des Isolierkörpers bzw. der Außenhaut U-förmig, wobei durch Aneinanderreihung der einzelnen Dachziegel eine Rinne entsteht, in denen Solarelemente angeordnet sind. Bei der DE 32 13 882 A1 wird in diese Rinne das Solarelement beispielsweise über mehrere Dachziegel nacheinander verlegt. In der GB 2 299 662 A wird diese Rinne durch quergelegte Montierteile unterteilt, wodurch dann jeder einzelne Dachziegel eine Ausnehmung für Solarelemente aufweist.

Nachteilig bei beiden Arten von Dachziegeln ist das komplizierte Anbringen und Zusammenstellen jedes einzelnen mehrteiligen Dachziegels. Die jeweilige Montage am Dach ist sehr aufwändig und muss durch Fachleute durchgeführt werden. Vor allem die Ausführung mit den Rahmenelementen aus der britischen Schrift ist eine sehr aufwändige Ausführung und teure Bauweise. Ebenfalls aufwändig ist die Montage der zusätzlichen Glasplatte am Dach gemäß der deutschen Schrift.

Aufgabe der Erfindung ist es, die vorbeschriebenen Nachteile zu vermeiden und einen gegenüber dem Stand der Technik verbesserten Dachziegel anzugeben.

Dies wird dadurch gelöst, dass die Außenhaut rahmenförmig ausgebildet ist und den zentralen Bereich der Deckfläche des Dachziegels frei lässt. Dies führt dazu, dass der Bereich des Dachziegels, der zu anderen Dachziegeln angrenzt, immer im Wesentlichen einheitlich ausgeführt ist, wodurch eine einfache Montage erreicht wird. Im zentralen Bereich können die jeweils gewünschten Elemente für die verschiedenen Funktionen bzw. Solarelemente vorgesehen sein. Gegenüber dem Stand der Technik ist dadurch ein Dachziegel geschaffen, der eine einfache Montage ermöglicht. Der umseitige Rand des Dachziegels kann dabei immer gleich ausgeführt werden, wodurch ein Aneinanderreihen der Dachziegel in einfacher Art und Weise gewährleistet wird und kein Unterteilen der Rinnen notwendig ist. Bevorzugt kann der Wannenbereich dabei der Aufnahme von Elementen mit unterschiedlichen, am Dach benötigten Funktionen, dienen.

Eine Wanne wird hierin derart definiert, dass sie einen Wannenboden und eine um den Wannenboden umseitig angeordnete, vom Wannenboden abstehende Wannenwandung aufweist. Der Wannenboden weist zumindest den Tiefpunkt oder die Tieffläche der Wanne auf und muss nicht eben sein. Bevorzugt ist der Querschnitt des die Wanne bildenden Körpers umseitig in etwa U-förmig, wobei der Wannenwandungoberrand bevorzugt derart ausgeführt ist, dass er auf einer zum Wannengrund parallelen Ebene liegt.

Vorteilhaft kann vorgesehen sein, dass die Wanne im Isolierkörper ausgebildet wird, wobei dieser mit der Außenhaut einen Verbund bilden kann. Die Wanne kann Durchbrüche aufweisen, die beispielsweise für Zu- oder Abführleitungen vorgesehen sein können. Weiters kann die Wanne ausgeschäumt sein, wobei im ausgeschäumten Bereich wiederum Leitungen, Ausnehmungen oder sonstiges vorgesehen sein kann.

Eine vorteilhafte Ausführungsform sieht vor, dass in der Wanne wenigstens eine Rohrleitung oder Ausnehmung für eine Flüssigkeit angeordnet sein kann. In dieser Rohrleitung kann diese Flüssigkeit bzw. das Medium durch Sonneneinstrahlung erwärmt werden.

Ein weiteres Ausführungsbeispiel kann vorsehen, dass im zentralen Bereich der Deckfläche des Dachziegels eine Platte, vorzugsweise eine transparente Glas-, Verbund- oder Kunststoffplatte, angeordnet ist, welche im Dachverband die Dachhaut mitbildet. Diese Platte wird dabei vorzugsweise rahmenförmig von der Außenhaut derart umgeben bzw. eingefasst, dass der Isolierkörper nicht direkt der Witterung ausgesetzt wird.

Gemäß einem bevorzugten Ausführungsbeispiel kann vorgesehen sein, dass sich die vorzugsweise metallische Außenhaut unterhalb der transparenten Platte fortsetzt. Somit kann die gesamte Außenhaut im Wesentlichen durchgehend im oberen Bereich am Isolierkörper angeschäumt sein, wobei sie die gleiche äußere Form mitbildet. Bei diesem Ausführutigsbeispiel ist die Außenhaut einstückig mit einer, vorzugsweise metallischen, innenliegenden Innenschicht ausgebildet. Bevorzugt bildet der rahmenförmige Bereich die witterungsbeständige, außenliegende Außenhaut, während der innenliegende Bereich als Abgrenzung zwischen den einbringbaren Solarelementen und dem Isolierkörper dient. Generell kann die Außenhaut aus verschiedensten Materialien wie Kunststoff, Keramik, Metall, glasfaserverstärkten Platten usw. gebildet sein.

Weiters kann vorgesehen sein, dass im zentralen Bereich der Deckfläche des Dachziegels, gegebenenfalls unterhalb der Platte, wenigstens ein photovoltaisches Element angeordnet ist.

Ein weiteres Ausführungsbeispiel kann vorsehen, dass die Außenhaut einen vorzugsweise umlaufenden Absatz aufweist, auf welchem die Platte aufliegt. Die Platte kann dabei am Absatz angeklebt sein, wodurch der Isolierkörper, die Außenhaut und die Platte im Wesentlichen das Äußere des Dachziegels bilden, wobei in am Dach montierten Zustand der Isolierkörper nicht direkt der Witterung ausgesetzt ist.

Ein bevorzugtes Ausführungsbeispiel kann vorsehen, dass auf dem Absatz ein elastisches Material angeordnet ist, das vorzugsweise durch den die Platte befestigenden Kleber gebildet ist.

Bevorzugt kann vorgesehen sein, dass der Schaumkunststoff aus Polyurethan (PUR) oder Polyisocyanurat (PIR) hergestellt ist, wobei dieser Schaumkunststoff (der spätere Isolierkörper) an die Außenhaut angeschäumt ist und mit dieser einen mechanischen Verbund bildet.

Vorzugsweise kann dabei vorgesehen sein, dass die Außenhaut in den mit dem Schaumkunststoff in Berührung kommenden Bereichen mit einer Beschichtung versehen, insbesondere mit einem Haftprimer oberflächenbehandelt ist. Dies führt zur besseren Haftung zwischen Außenhaut und Schaumkunststoff.

Um ein einfaches Aneinanderreihen und Anbringen der einzelnen Dachziegel am Dach zu erreichen, kann vorgesehen sein, dass der Isolierkörper eine Nut und eine Feder aufweist, die derart ausgebildet und angeordnet sind, dass die Isolierkörper der Dachziegel im Dachverband eine möglichst wasserundurchlässige Nut-Feder-Verbindung eingehen und die Deckfläche der Dachziegel durchgehend die Dachhaut des Dachverbandes mitbildet.

Schutz wird auch begehrt für einen Dachverband aus mehreren Dachziegeln, wobei eine Vielzahl von Dachziegeln eine sich zumindest im Wesentlichen über die gesamte Deckfläche des Dachziegels erstreckende Außenhaut aufweist und wobei wenigstens einer der Dachziegel nach einem der Ansprüche 1 bis 12 ausgebildet ist. Der Großteil der gesamten Dachhaut wird dabei durch die metallische Außenhaut gebildet. Von der Anzahl der Ziegel mit Platte ist auch deren Anteil an der Dachhaut des gesamten Dachverbandes abhängig.

Für die Erdung kann vorgesehen sein, dass der Dachverband über - je zwei Dachziegel verbindende elektrisch leitfähige - Befestigungsmittel und einer Erdungsleitung geerdet ist.

Weiters wird auch Schutz für ein Verfahren zur Herstellung eines Dachziegels, der eine, insbesondere metallische, witterungsbeständige Außenhaut und einen Isolierkörper aufweist, wobei die Außenhaut in eine Form eingelegt und die Form mit schäumbarem bzw. schäumenden Kunststoff gefüllt wird, begehrt.

Mit dieser Erfindung wird ein multifunktionaler Dachziegel bereitgestellt, der sowohl unterschiedliche Solarelemente aufnehmen als auch andere Funktionen am Dach übernehmen kann. Weiters wird das Anbringen von zusätzlichen, klobigen Paneelen am Dach wird verhindert.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1 bis 7: diverse Ausführungen und Ansichten eines Dachziegels für Rohrleitungen,
- Fig. 8 bis 10 ,: diverse Ansichten und Ausführungen eines Dachziegels für Photovoltaikelemente,
- Fig. 11 und 12: Dachziegel mit Lichteinlass,
- Fig. 13 bis 15: Ansichten eines Standardziegels,
- Fig. 16 bis 18: Dachverbände aus Dachziegeln mit unterschiedlichen Funktionen,
- Fig. 19 und 20: Detailansichten von den Überlappungsbereichen zwischen den Dachziegeln und
- Fig. 22 bis 26: schematisch das Verfahren zum Anschäumen des Schaumkunststoffs an der Außenhaut.

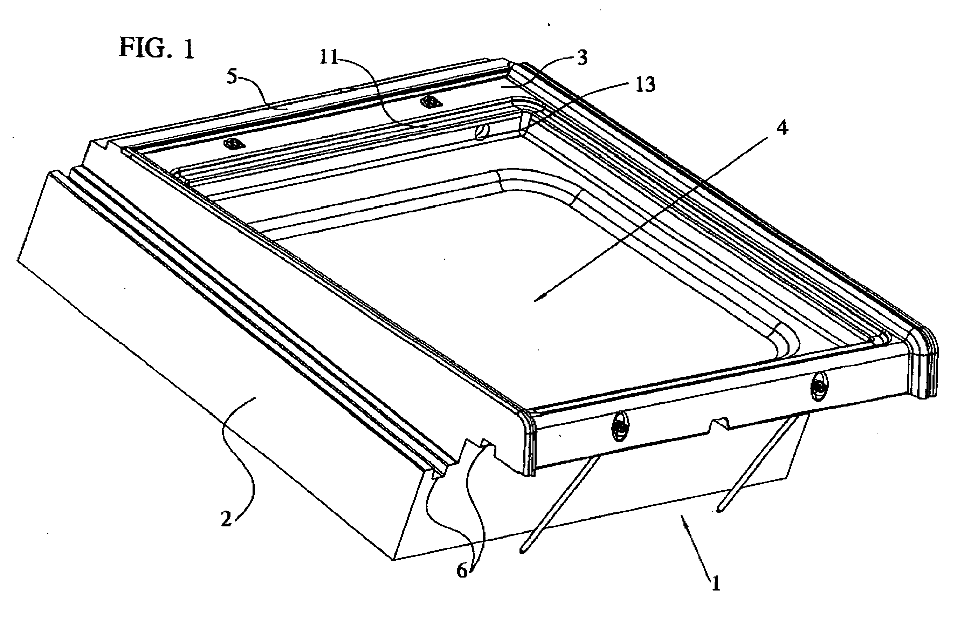

Fig. 1 zeigt allgemein einen Dachziegel 1, bestehend aus dem Isolierkörper 2, in welchem die Wanne 4 eingeformt ist. Auf diesem Isolierkörper 2 ist rahmenförmig die Außenhaut 3 rund um die Wanne 4 bzw. den Wannenoberrand angeformt bzw. angeschäumt. Der Isolierkörper 2 weist entsprechend eine Feder 5 bzw eine Nut 6 auf, die das Aneinanderreihen von Dachziegeln 1 ermöglichen. In der Wanne 4 des Isolierkörpers 2 ist bereits unterhalb des Absatzes 11 der Außenhaut 3 eine von mehreren möglichen Durchtrittsöffnungen 13 (hier Bohrung) dargestellt, welche für das Anbringen von Anschlüssen für Rohrleitungen vorgesehen ist.

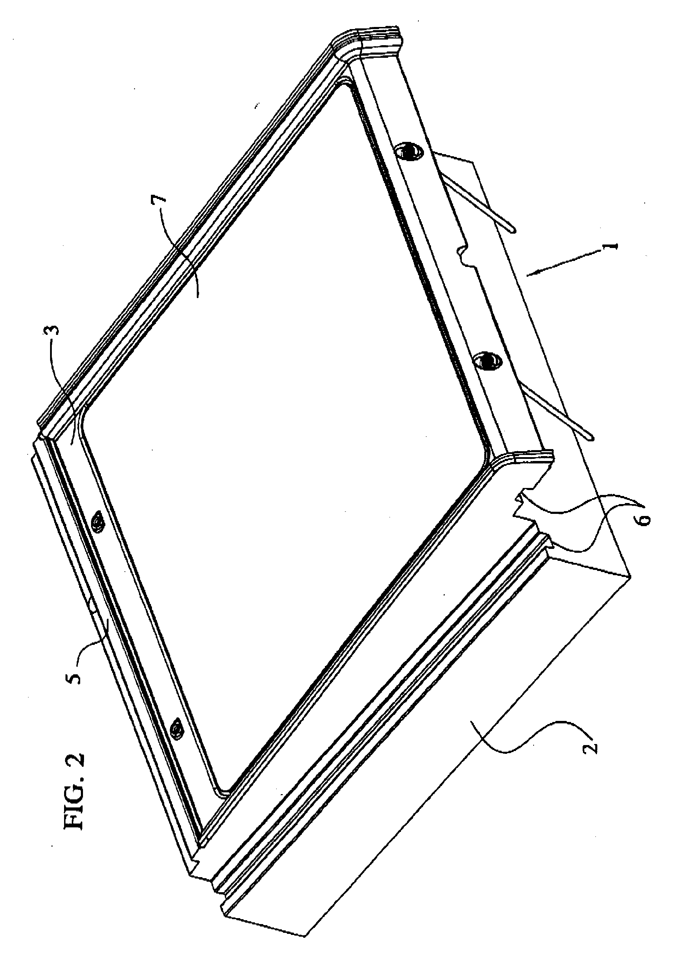

In Fig. 2 ist ein Dachziegel 1 dargestellt, bei dem eine vorzugsweise transparente Platte 7 auf den Absatz 11 der Außenhaut 3 aufgebracht ist und die Wanne 4 überdeckt.

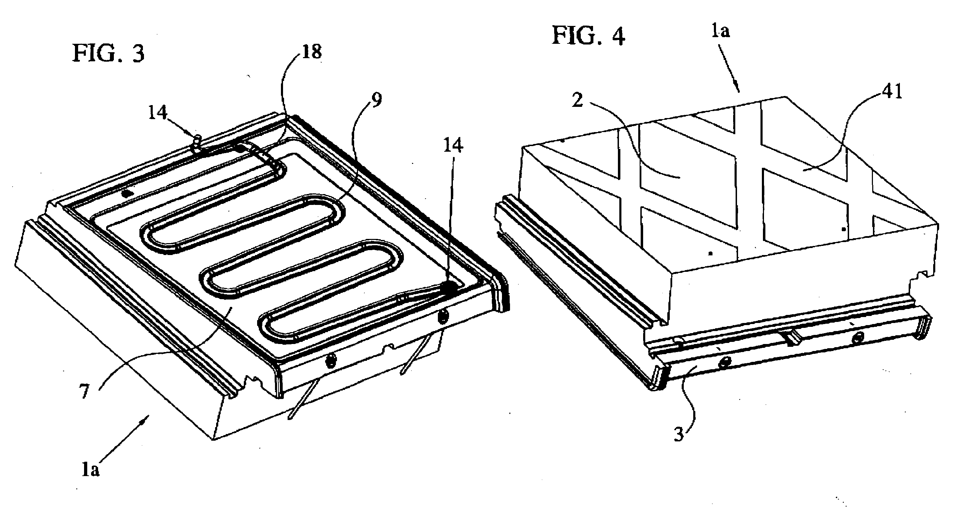

In Fig. 3 ist nun der Dachziegel als Leitungsziegel 1a ausgeführt, wobei in den Rohrleitungen 9 Fluid 21 fließen kann. Die Platte 7 ist hierbei als Solarglas ausgeführt, welche die Sonneneinstrahlung auf die Rohrleitungen 9 optimiert. Bezugszeichen 14 weist auf die Rohrleitungsanschlüsse hin, wobei die Rohrleitungen 9 teilweise durch die Durchtrittsöffnung 13 geführt werden.

Fig. 4 zeigt den Leitungsziegel 1a von unten, wobei dargestellt ist, dass auf der Unterseite des Isolierkörpers 2 bzw. an der Unterseite des gesamten Ziegels 1 Wasserablaufkanäle 41 gebildet sein können, die Kondenswasser bzw. ungewünscht eingedrungenes Wasser ableiten können. Im Dachverband 32 können diese rillen- bzw. kanalförmigen Wasserablaufkanäle 41 ein durchgängiges Netz bilden.

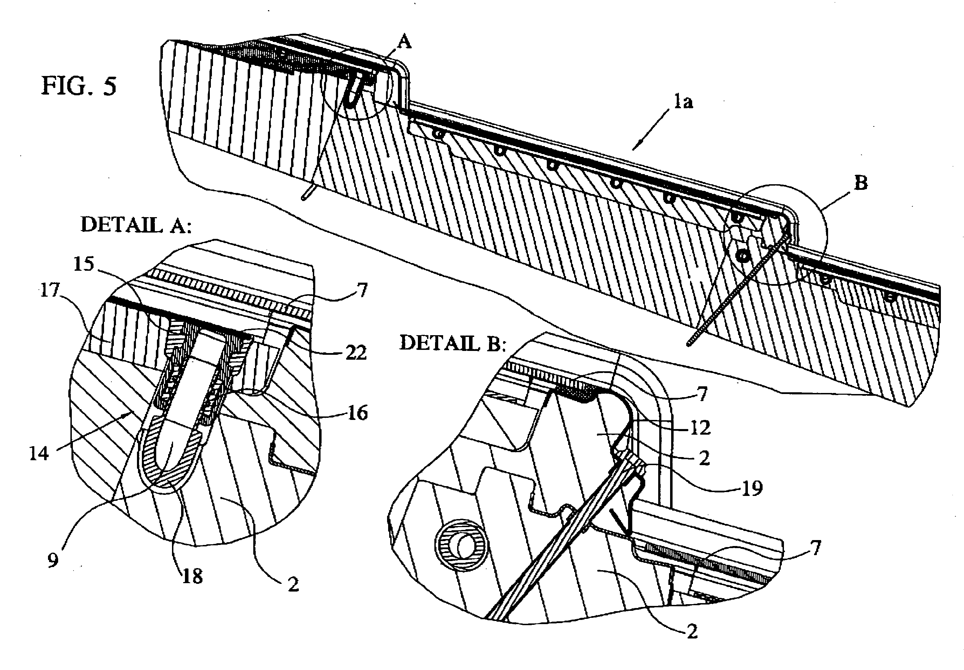

Fig. 5 zeigt Schnittdarstellungen von sich überlappenden Leitungsziegeln 1 a, wobei im Detail A der Übergang der Rohrleitung 9 von einem Dachziegel 1 a zum benachbarten Dachziegel 1a dargestellt ist. Hierbei ist das Dichtungsendstück 15 mit der Rohrleitung 9 des nächsten Dachziegels 1 unter Bildung eines Rohdeltunesanschlusses 14 mit Dichtung 16 verbunden. Das eigentliche Solarelement besteht hierbei aus dem Kollektor 22, der Kollektorisollerung 17 und der darin geführten Rohrleitung 9, die in der Wanne 4 des Dachziegels 1a unterhalb der vorzugsweise transparenten Platte 7 angeordnet sind. Die Kollektorisolierung 17 kann auch in Form eines Vakuums bzw. einer Vakuumwanne oder Vakuumkammer gebildet sein. Im Detail B ist das Anbringen der Dachziegel 1a mittels Befestigungsmittel/-schrauben 19 dargestellt, wobei diese an jeder Position des Dachziegels 1, insbesondere entlang des umseitigen Rands angebracht sein können. Detail A zeigt noch einen Dehnungskompensator 18, der bei möglichen hohen Temperaturen in der Rohrleitung 9 die unterschiedlichen Ausdehnungen der Materialien ausgleichen kann. Dieser Dehnungskompensator 18 kann im gesamten Bereich der Rohrleitungen 9, aber bevorzugt im Bereich der Rohrleitungsanschlüsse 14, angeordnet sein.

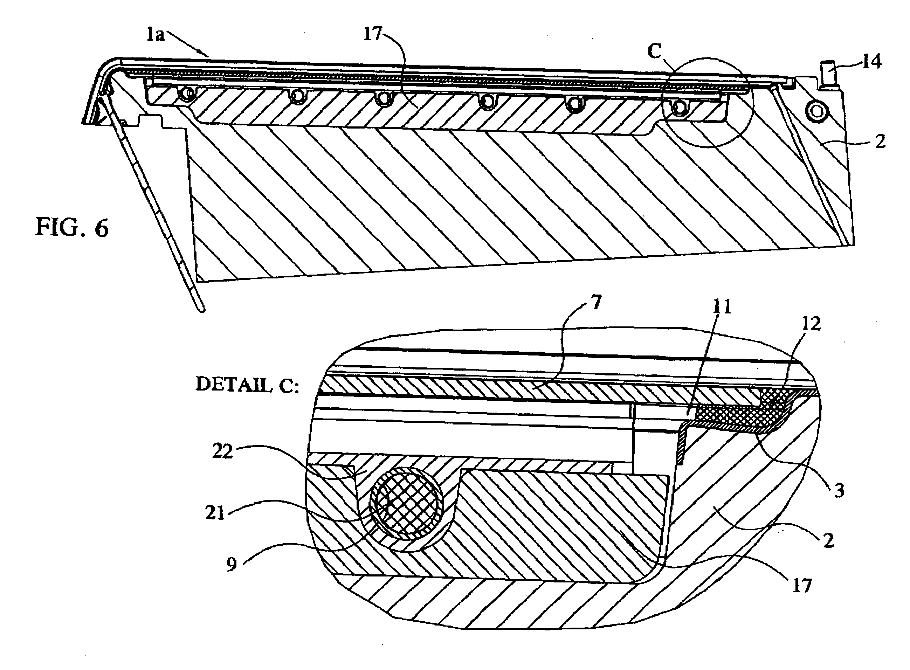

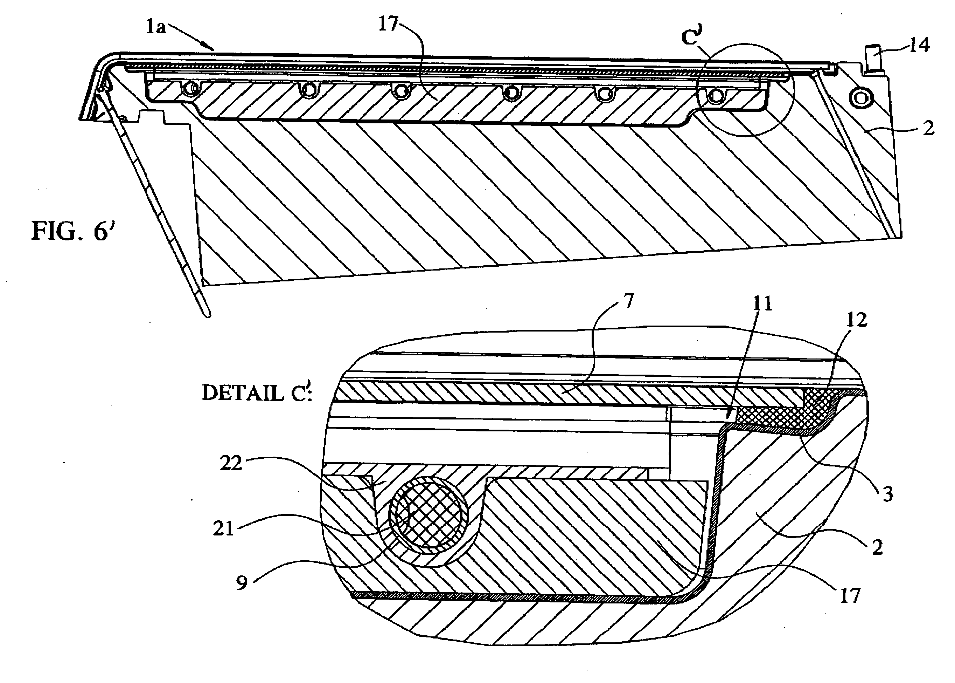

In Fig. 6 ist wiederum eine Schnittzeichnung eines Dachziegels bzw. Leitungsziegels 1a dargestellt, wobei im rechten Bereich der Rohrteitungsanschluss 14 erkennbar ist. Im Detail C ist der Kollektor 22 ersichtlich, der in diesem Fall als gegossene Platte ausgeführt ist, welcher die Rohrleitung 9 mit dem darin enthaltenen Fluid 21 beinhaltet. Der Kollektor 22 ist mit der Kollektorisolierung 17 verbunden, welche zusammen in der Wanne 4 des Isolierkörpers 2 angeordnet sind. Die Platte 7 ist im Bereich des Absatzes 11 über das elastische und klebende Material 12 mit der Außenhaut 3 verbunden.

Fig. 6' mit dem Detail C' zeigt einen Dachziegel 1a, bei dem die vorzugsweise metallische Außenhaut 3 durchgehend oberhalb des Isolierkörpers 2 angebracht bzw. an diesem angeschäumt ist. Durch diese Ausführung kann der Isolierkörper 2 samt Außenhaut 3 standardisiert hergestellt werden, wonach die entsprechenden Einsätze in die wannenförmige Ausnehmung eingesetzt werden können. Somit bildet die Außenhaut 3 nicht nur im Rahmenbereich die konkret außenliegende Abdeckung sondern im zentralen Bereich des Dachziegels 1 auch eine Innenschicht, die durchgehend im Deckbereich den Isolierkörper 2 vor Witterungs- und sonstigen Einflüssen schützt.

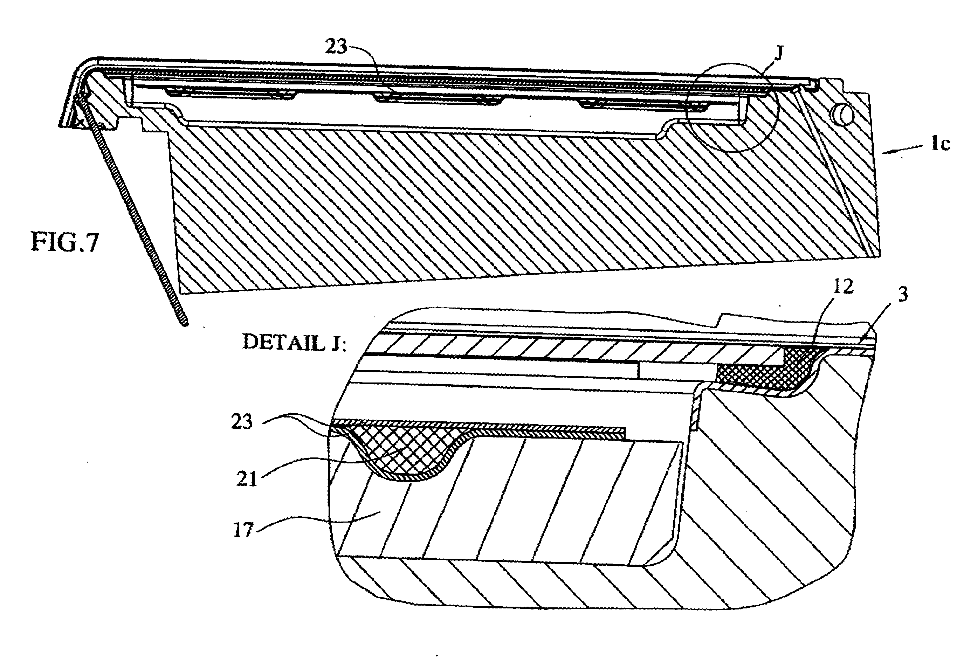

Fig. 7 und Detail J zeigen eine alternative Ausführung eines Leitungsziegels 1c, wobei die Rohrleitung 9 durch zwei miteinander teilweise verbundene Metall- und/oder Kunststoffplatten 23 gebildet wird, welche eine vorzugsweise geschlängelte Führung des Fluids 21 in einem durch die Metall- und/oder Kunststoffplatten 23 gebildeten Kanal erlaubt. Bei Einsatz von Photovoltalkmodulen im Dachziegel 1 kann ein Isoliervakuum im Bereich des PV-Elements in ähnlicher Art und Weise gebildet werden.

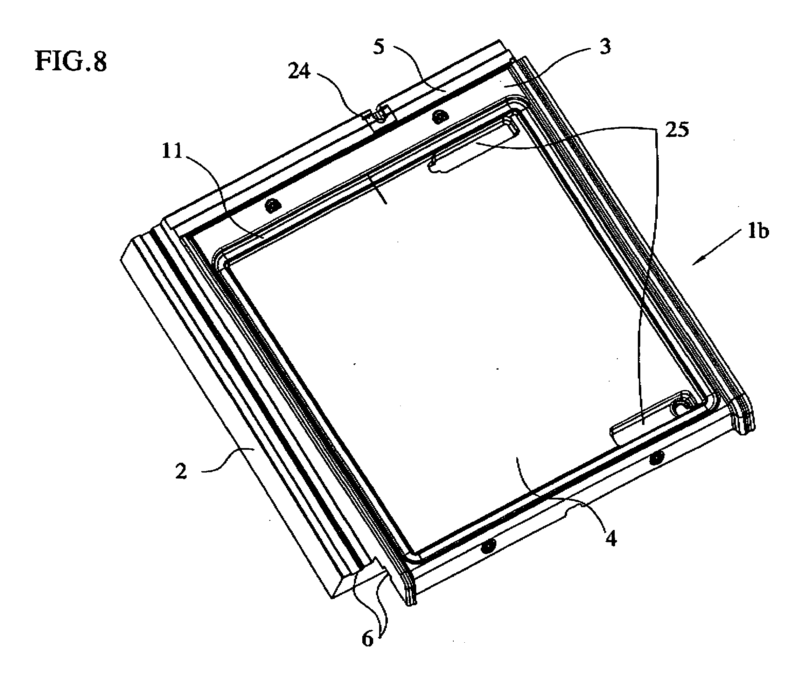

Fig. 8 zeigt einen Dachziegel 1, der als Photovoltaikziegel (PV-Ziegel) 1b ausgeführt ist. Hierbei ist in der Wanne 4 zusätzlich eine Elektrikausnehmung 25 im Isolierkörper 2 vorgesehen. Wiederum ist um die Wanne 4 rahmenförmig die Außenhaut 3 aufgebracht bzw. angeschäumt, wobei im gezeigten Beispiel eine Steckerhalterung 24 integriert ist.

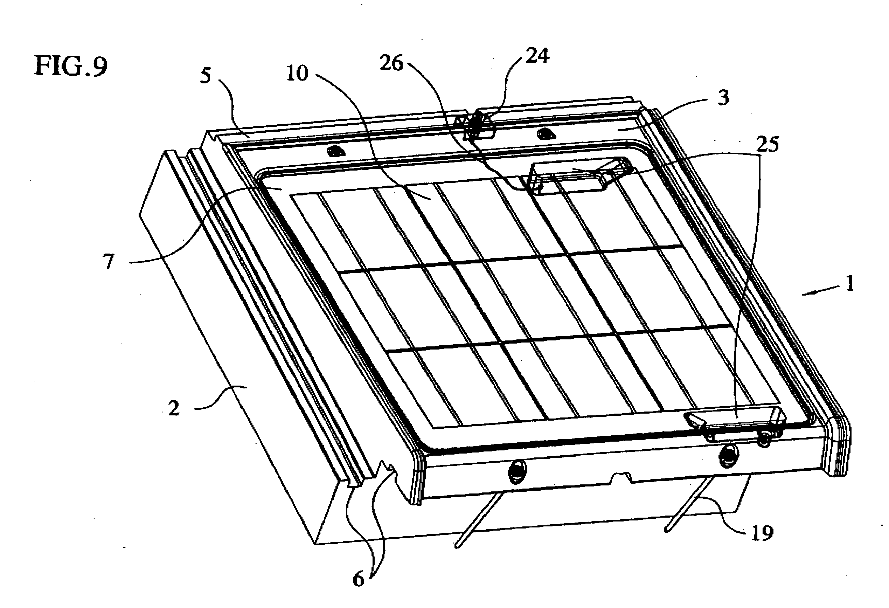

Fig. 9 zeigt hierzu, dass die Steckerhalterung 24 über ein Steckerkabel 26 mit der Elektronikausnehmung 25 verbunden ist. Unterhalb der vorzugsweise transparenten Platte 7 sind photovoltaische Elemente 10 in der-Wanne 4 angeordnet.

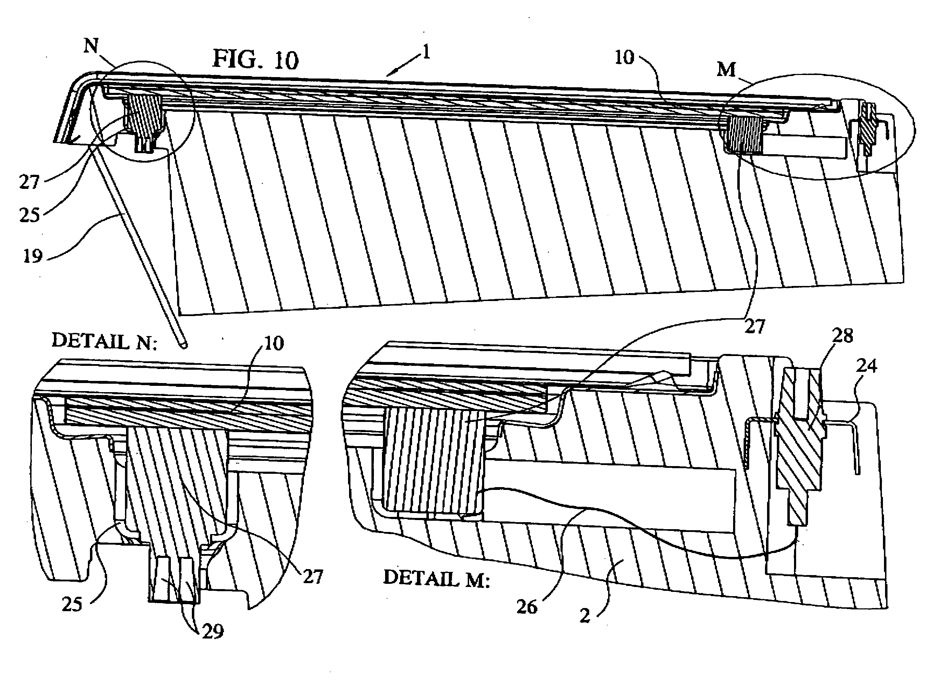

In Fig. 10 ist im Querschnitt der PV-Ziegel 1b mit photovoltaischem Element 10 zu sehen, welches im Bereich der Wanne 4 angeordnet ist und wobei die elektrischen Anschlüsse 27, die in den Elektrikausnehmungen 25 angeordnet sind, die Kontaktstelle des photovoltaischen Elements 10 mit dem Stromkreislauf bilden. Das Detail N zeigt dabei den ersten elektrischen Anschluss 27, mit der Steckeraufnahme 29. Der dazu passende Stecker 28 ist in Detail M dargestellt, welcher in der Steckerhalterung 24 befestigt ist und über das Steckerkabel 26 mit einem zweiten elektrischen Anschluss 27 verbunden ist.

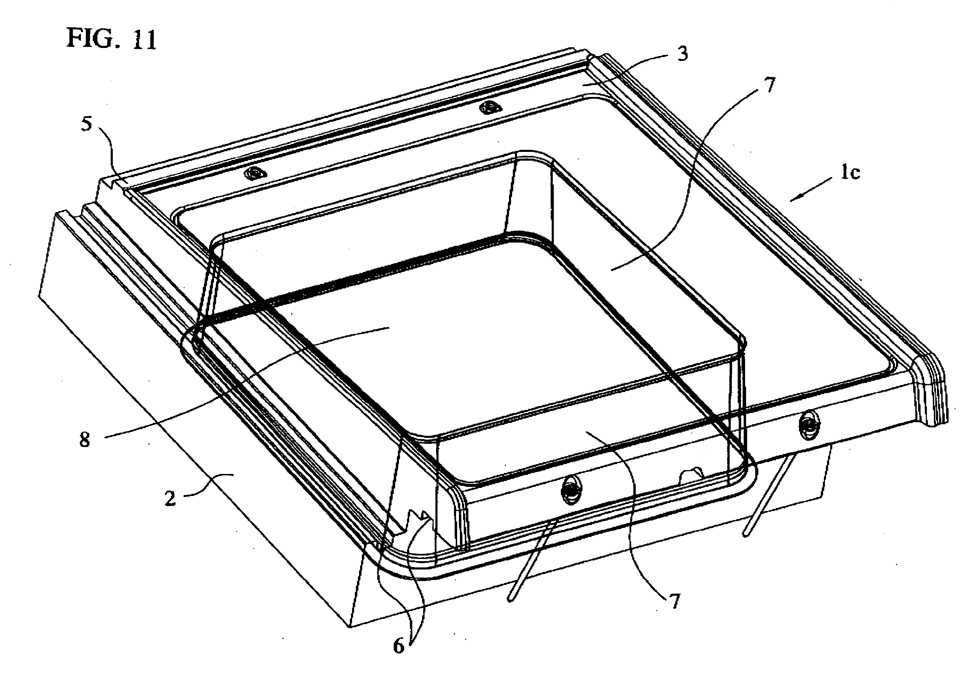

Fig. 11 zeigt einen Dachziegel 1, der als Lichteinlassziegel 1c ausgeführt ist. Hierbei weist der Isolierkörper 2 einen Durchbruch 8 auf, der oben und unten von einer Platte 7 begrenzt ist, die beispielsweise als Isolier- oder Sonnenschutzglas ausgeführt sein kann.

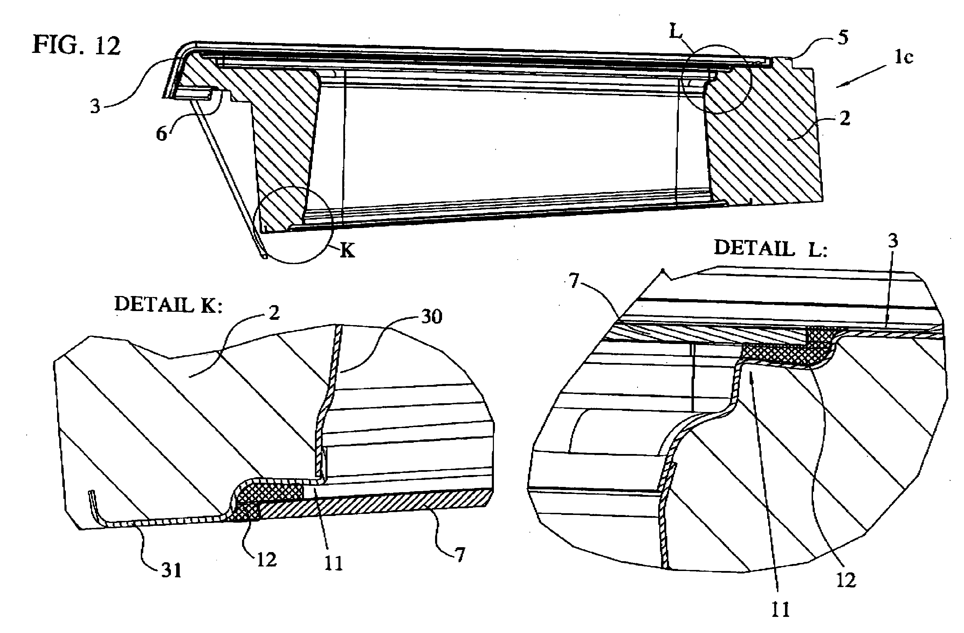

In Fig. 12 ist ein Querschnitt dieses Lichteinlassziegels 1c zu sehen, wobei im Detail K erkennbar ist, dass die Innenverkleidung 30 bis zum Halterahmen 31 geführt ist. Im Bereich der Innenverkleidung 30 bzw, des Halterahmens 31 kann dabei wiederum ein Absatz 11 angeordnet sein, an welchem die untere (Glas-)Platte 7 über ein elastisches Element 12 anbringbar ist. Gleiches gilt für das Detail L mit der oberen vorzugsweise transparenten Platte 7.

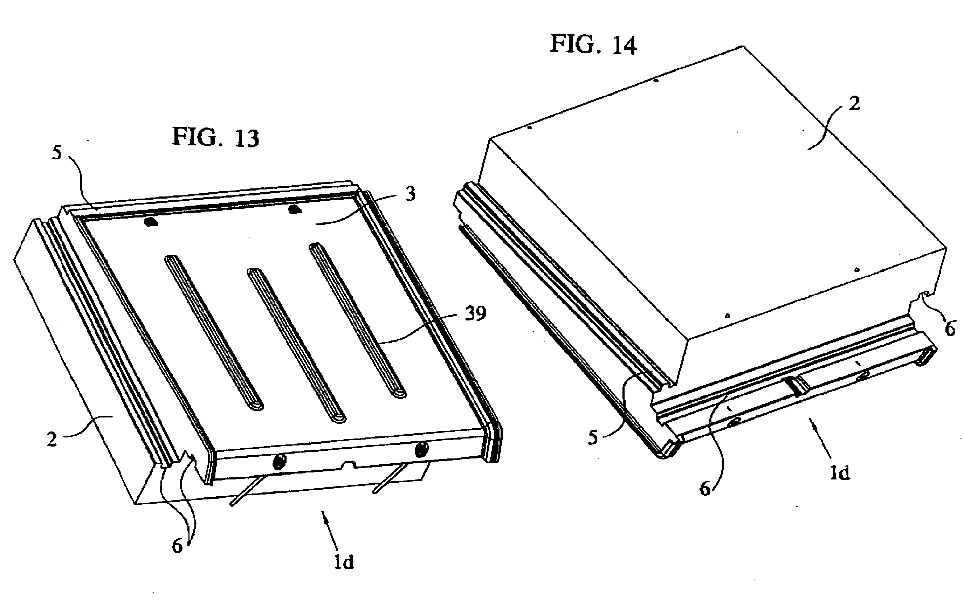

Fig. 13 und 14 zeigen einen wannenlosen Dachziegel 1d, bei dem der Isolierkörper 2 an die Außenhaut 3 angeschäumt ist, wobei die Außenhaut Versteifungsrippen 39 in beliebiger Ausgestaltung aufweisen kann. Hierbei ist wieder die Möglichkeit der Nut-Feder-Verbindung erkennbar. Auch ist natürlich hier das Vorsehen von Wasserablaufkanälen 41 möglich.

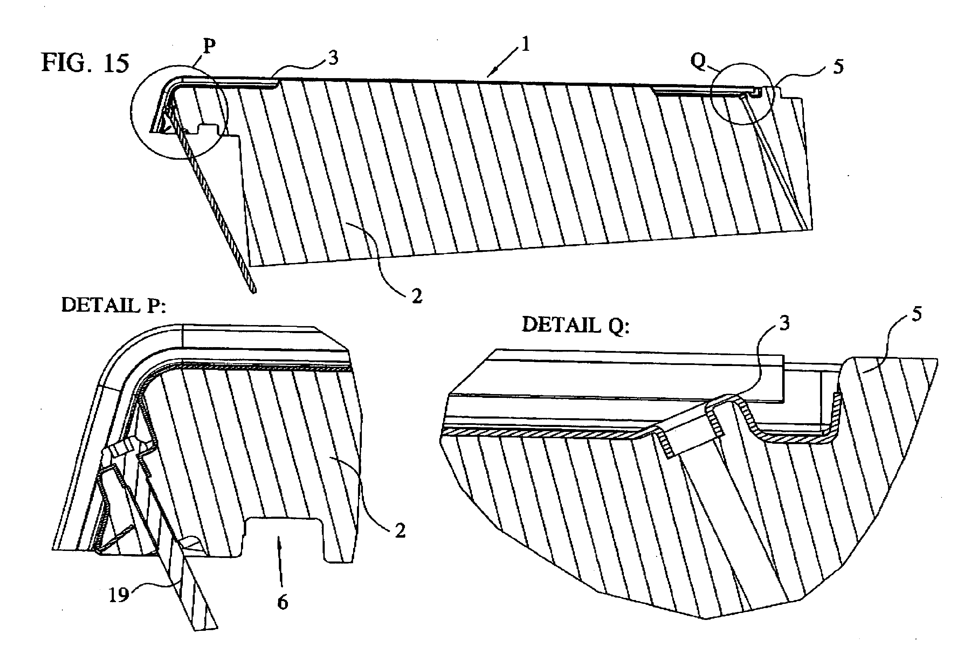

Die Fig. 15 zeigt weitere Verbindungsvarianten von Dachziegeln 1 mit der Befestigungsschraube 19, die der Erdung dienen kann.

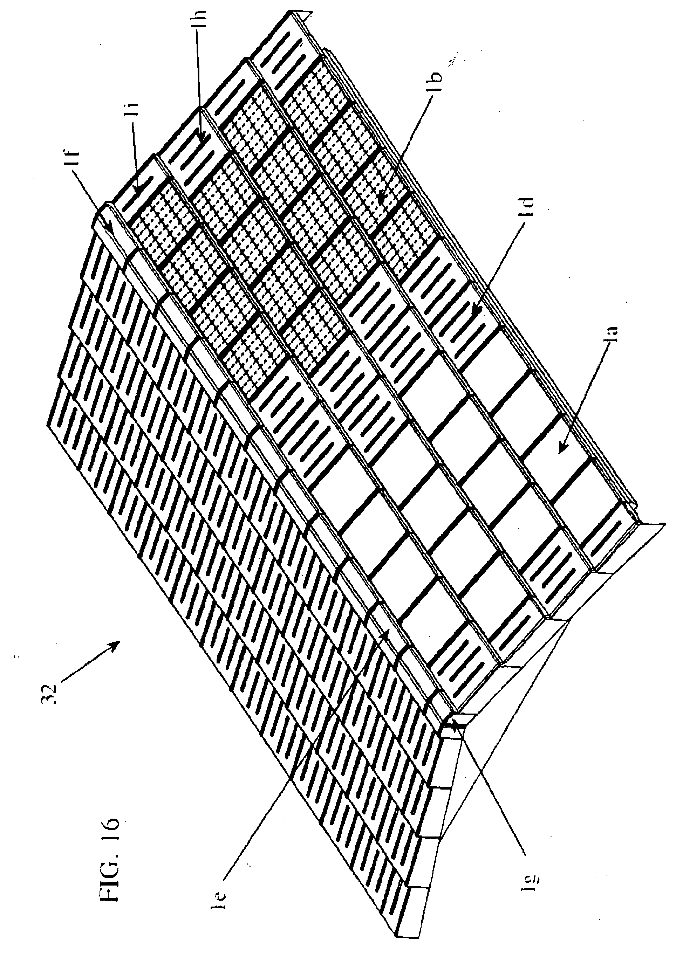

Fig. 16 zeigt einen Dachverband 32, der aus unterschiedlichen Dachziegelarten besteht. Hierbei sind Leitungsziegel 1a, PV-Ziegel 1b und wannenlose Dachziegel 1d vorgesehen. Zusätzlich sind Giebelziegel 1e, ganze Giebelabschlussziegel 1f und halbe Giebelabschlussziegel 1g Teil des Dachverbands 32. Weiters sind ganze Abschlussziegel 1h und halbe Abschlussziegel 1i am Rand der Dachfläche angeordnet.

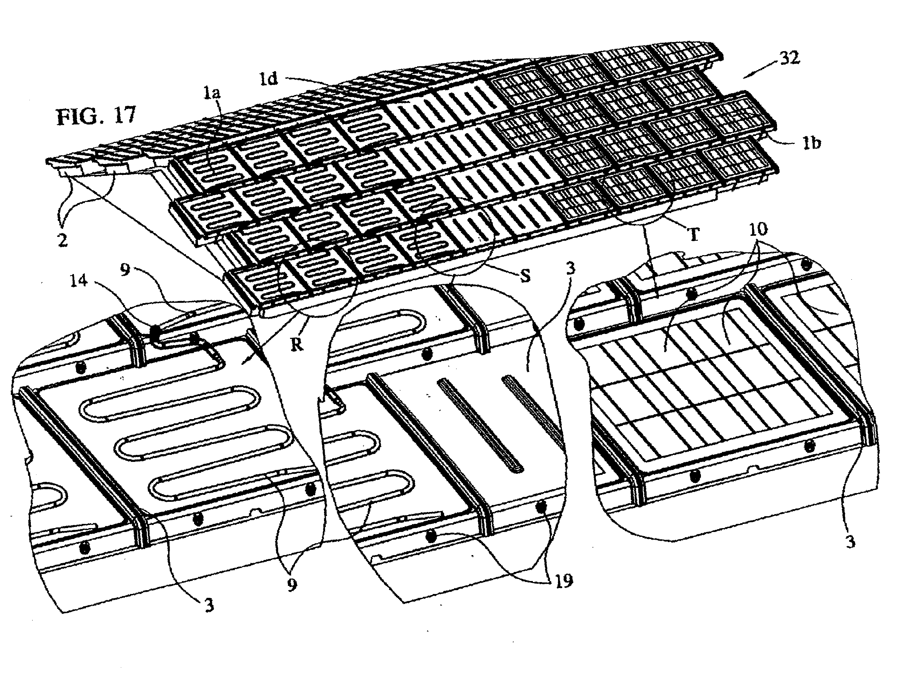

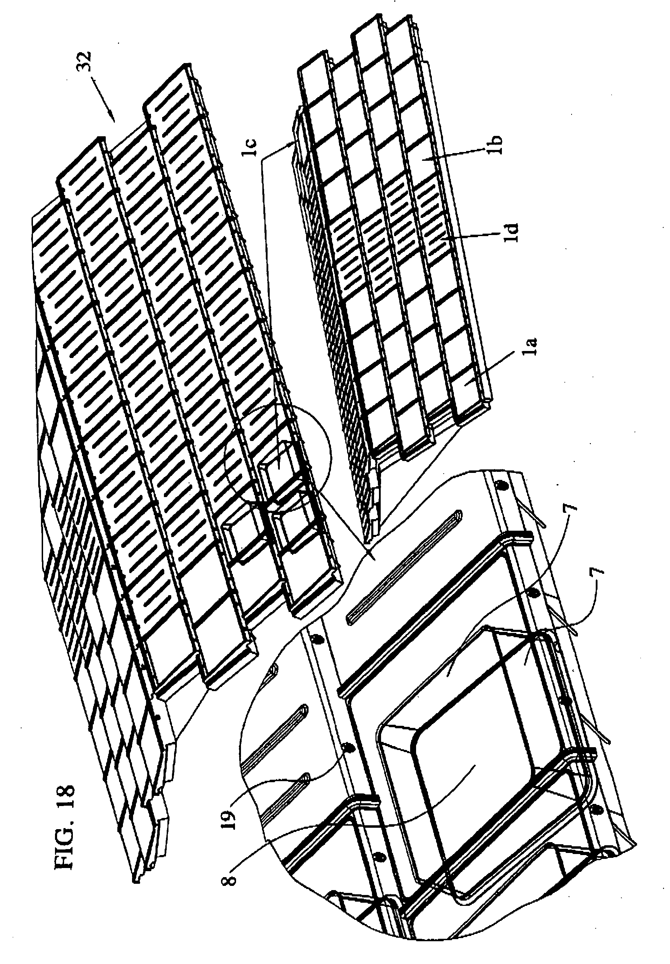

In Fig. 17 ist die Multifunktionalität der hier vorliegenden Erfindung sehr gut erkennbar, wobei die unterschiedlichen Ziegelarten 1a, 1b, 1c (siehe Fig. 18) und 1d in beliebigen Kombinationen nebeneinander angeordnet sein können. Im Detail R ist nochmals der Übergang zwischen den Rohrleitungen 9 über den Rohrleitungsanschluss 14 ersichtlich. Im Detail S sind wannenlose Dachziegel 1d und Leitungsziegel 1a nebeneinander zu sehen, wogegen im Detail T die PV-Ziegel 1b mit deren photovoltaischen Elementen 10, die unterhalb einer transparenten Platte 7 angeordnet sind, dargestellt sind. In Fig. 18 sind zusätzlich noch Lichteinlassziegel 1c in den Dachverband integriert.

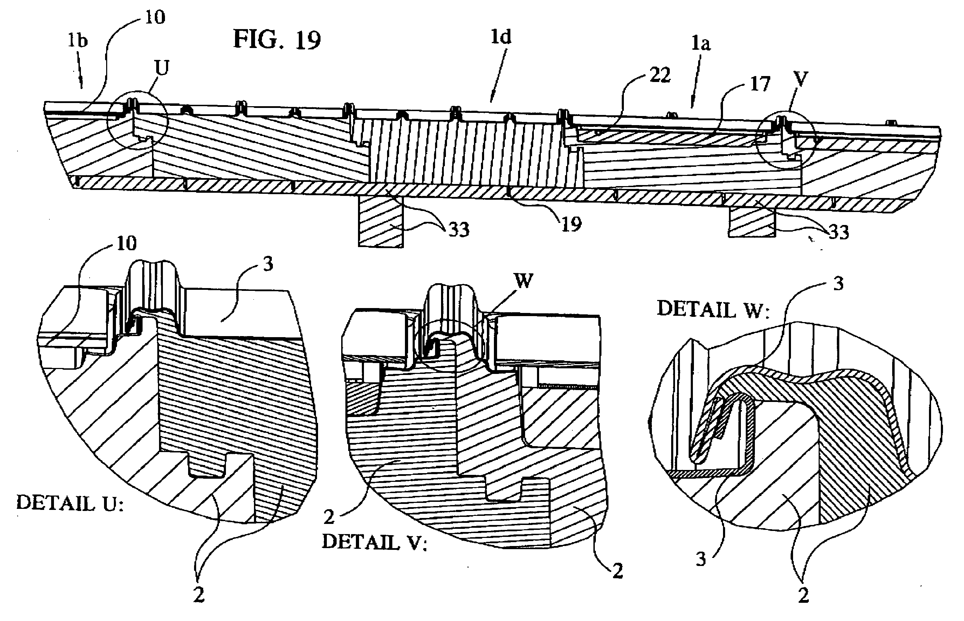

Fig. 19 zeigt die zueinander passenden Überlappungsbereiche zwischen den einzelnen teilweise unterschiedlichen Dachziegeln, welche auf einer Dachkonstruktion 33 angeordnet sind. Aus den Überlappungsdetails U, V und W geht hervor, dass die Isolierkörper 2 nicht mit der Witterung direkt in Verbindung kommen, wodurch die Isolierkörper 2 unterschiedlicher Dachziegel 1 eine dichte Verbindung, auch durch die gefalzten Enden der Außenhaut 3, eingehen.

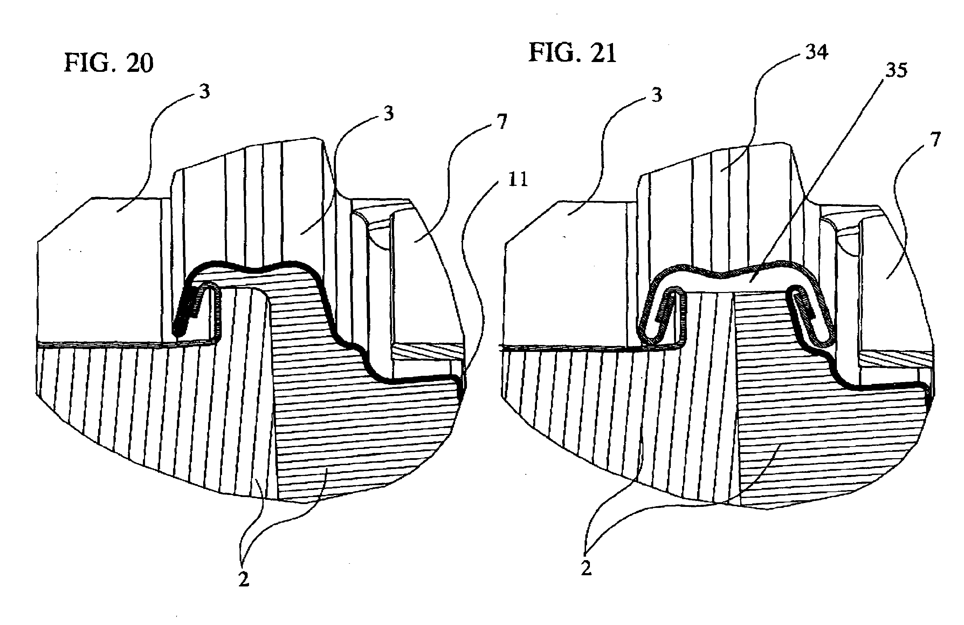

Fig. 21 stellt eine alternative Variante des Überlappungsbereiches gegenüber Fig. 20 dar. In Fig. 21 wird eine Verbindungsleiste 34 in die gefalzten Enden der Außenhaut 3 eingehängt bzw. eingeklemmt, wobei zwischen Isolierkörper 2 und Verbindungsleiste 34 ein Leerraum 35 verbleiben kann. Beide Ausführungsvarianten sind mit oder ohne Leerraum 35 möglich.

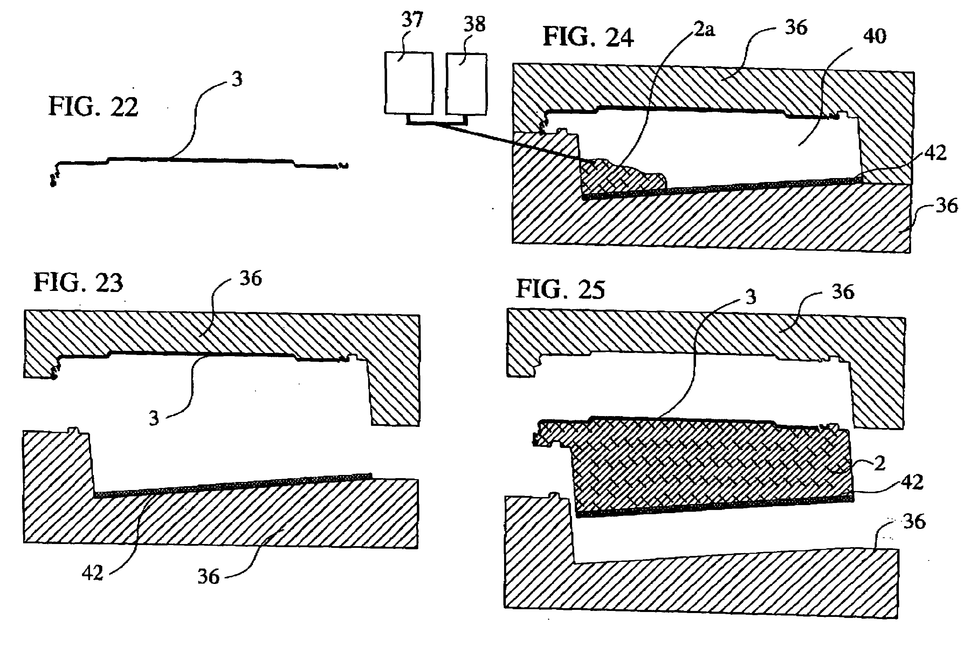

Fig. 22 zeigt die Außenhaut 3, die sowohl durchgehend als auch rahmenförmig ausgebildet sein kann. In Fig. 23 wird diese Außenhaut 3 und, wenn erforderlich, der Formstabilisator 42 an die entsprechende Form 36 angelegt. Anschließend wird, wie in Fig. 24 dargestellt, die Form 36 geschlossen, wonach die Ausgangsmaterialien für die Schaumkunststoffmasse in den Hohlraum 40 verbracht werden. Die Schaumkunststoffmasse 2a wird dabei durch Polyol 37 und Isocyanat 38 und gegebenenfalls Treibmitteln und anderen Hiffsmitteln wie Wasser, Aktivatoren, Schaumstabilisatoren, Flammschutzmittel, Pestiziden usw. gebildet. Nach dem Füllen des Hohlraums 40 mit dem Schaumkunststoff 2a und nach der chemischen Reaktion und Anschäumen dieser Masse an die Außenhaut 3 bilden Schaumkunststoff 2a und Außenhaut 3 zusammen einen Verbund, wonach die Form 36 wieder geöffnet werden kann. Der Isolierkörper 2 kann schichtweise aufgebaut sein. Vor allem kann an der Unterseite, aber auch in den Seitenbereichen des Isolierkörpers 2 ein Formstabilisator 42 angeordnet sein. Dieser kann in Form einer Platte, einer Folie, eines Gewebes, eines Vlies, einer feuerbeständigen Gipskartonplatte, einer Aluplatte oder ähnlichem ausgeführt sein. Der Formstabilisator 42 kann bereits während des Anschäumvorganges in die Form 36 eingelegt oder auch danach am Isolierkörper 2 angebracht werden. Er kann unterschiedliche Funktionen haben, dient aber vor allem dem Abbau bzw. der Kompensation von (Zug-) Spannungen während und/oder nach dem Anschäumen in der Form 36.

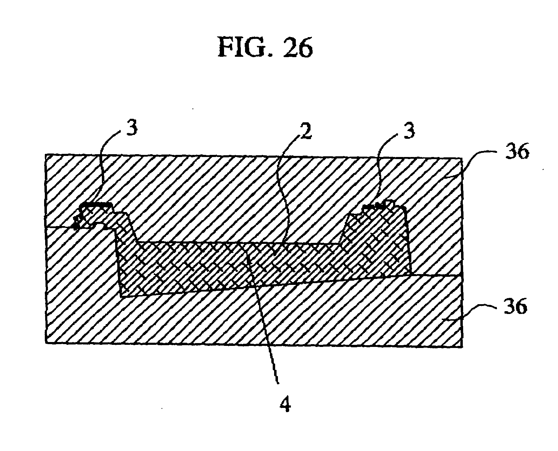

Fig. 26 zeigt hierzu passend die Gestaltung der Form 36, wenn die Außenhaut 3 rahmenförmig in die Form 36 eingebracht wird, wobei der durch den Rahmen der Außenhaut 3 durchstehende Teil der Form 36 der Negativteil der Wanne 4 des zu bildenden Isolierkörpers 2 ist.

## Patentansprüche

1. Dachziegel (1) mit einer, insbesondere metallischen, witterungsbeständigen Außenhaut (3), welche die Deckfläche des Dachziegels (1) zumindest teilweise abdeckt und im Dachverband (32) die Dachhaut mitbildet und einem, insbesondere aus Schaumkunststoff bestehenden, Isolierkörper (2) zur thermischen Isolation des Dachverbandes (32), wobei der Isolierkörper (2) auf seiner zur Deckfläche des Dachziegels (1) gerichteten Seite eine Wanne (4) bildet, **dadurch gekennzeichnet, dass** die Außenhaut (3) rahmenförmig ausgebildet ist und den zentralen Bereich der Deckfläche des Dachziegels (1) frei lässt.

2. Dachziegel nach Anspruch 1, **dadurch gekennzeichnet, dass** in der Wanne (4) wenigstens eine Rohrleitung (9) oder Ausnehmung für eine Flüssigkeit angeordnet ist.

3. Dachziegel nach Anspruch 1 oder 2, **dadurch gekennzeichnet, dass** im zentralen Bereich der Deckfläche des Dachziegels (1) eine transparente Platte (7), vorzugsweise eine Glas-, Verbund- oder Kunststoffplatte, angeordnet ist, welche im Dachverband (32) die Dachhaut mitbildet, wobei sich die Außenhaut (3) unterhalb der transparenten Platte (7) fortsetzt.

4. Dachziegel nach einem der Ansprüche 1 bis 3, **dadurch gekennzeichnet, dass** die witterungsbeständige Außenhaut (3) im zentralen Bereich der Deckfläche eine Ausnehmung aufweist.

5. Dachziegel nach einem der Ansprüche 1 bis 4, **dadurch gekennzeichnet, dass** im zentralen Bereich der Deckfläche des Dachziegels (1), gegebenenfalls unterhalb der transparenten Platte (7), wenigstens ein photovoltaisches Element (1 b) angeordnet ist.

6. Dachziegel nach einem der Ansprüche 1 bis 5, **dadurch gekennzeichnet, dass** die Außenhaut (3) einen vorzugsweise umlaufenden Absatz (11) aufweist, auf welchem die transparente Platte (7) aufliegt.

7. Dachziegel nach Anspruch 6, **dadurch gekennzeichnet, dass** die Platte (7) am Absatz (11) angeklebt ist.

8. Dachziegel nach Anspruch 6 oder 7, **dadurch gekennzeichnet, dass** auf dem Absatz (11) ein elastisches Material (12) angeordnet ist, das vorzugsweise durch den die Platte (7) befestigenden Kleber gebildet ist.

9. Dachziegel nach einem der Ansprüche 1 bis 8, **dadurch gekennzeichnet, dass** der Schaumkunststoff (2a) aus Polyurethan (PUR) oder Polyisocyanurat (PIR) hergestellt ist.

10. Dachziegel nach Anspruch 9, **dadurch gekennzeichnet, dass** der Isolierkörper (2) an die Außenhaut (3) angeschäumt ist und mit dieser einen mechanischen Verbund bildet.

11. Dachziegel nach Anspruch 10, **dadurch gekennzeichnet, dass** die Außenhaut (3) in den mit dem Schaumkunststoff (2a) in Berührung kommenden Bereichen mit einer Beschichtung versehen, vorzugsweise mit einem Haftprimer oberflächenbehandelt ist.

12. Dachziegel nach einem der Ansprüche 1 bis 11, **dadurch gekennzeichnet, dass** der Isolierkörper (2) eine Nut (6) und eine Feder (5) aufweist, die derart ausgebildet und angeordnet sind, dass die Isolierkörper (2) der Dachziegel (1) im Dachverband (32) eine vorzugsweise witterungsbeständige Nut-Feder-Verbindung eingehen und die Deckfläche der Dachziegel (1) durchgehend die Außenhaut (3) des Dachverbandes (32) mitbildet.

13. Dachverband aus mehreren Dachziegeln (1), wobei eine Vielzahl von Dachziegeln (1) eine sich zumindest im Wesentlichen über die gesamte Deckfläche des Dachziegels (1) erstreckende Außenhaut (3) aufweist und wobei wenigstens einer der Dachziegel (1) nach einem der Ansprüche 1 bis 12 ausgebildet ist.

14. Dachverband aus mehreren Dachziegeln nach einem der Ansprüche 1 bis 12, wobei der Dachverband (32) über elektrisch leitende Befestigungsmittel (19) der Dachziegel (1) und einer Erdungsleitung geerdet ist.

15. Verfahren zur Herstellung eines Dachziegels (1), der eine, insbesondere metallische, witterungsbeständige Außenhaut (3) und einen Isolierkörper (2) aufweist, nach einem der Ansprüche 1 bis 12, **dadurch gekennzeichnet, dass** die Außenhaut (3) in eine Form eingelegt und die Form mit Schaumkunststoff (2a) gefüllt wird.
